# EUROPEAN PATENT SPECIFICATION

(11) **EP 2 712 232 B1**
(45) Date of publication and mention of the grant of the patent: **04.11.2015**
(21) Application number: 13184809.5
(22) Date of filing: 17.09.2013
(51) Int. Cl.: H04W 36/00, H04W 36/14, H04W 60/00, H04W 80/06

(54) **Method of internet protocol (IP) to IP handover**
Verfahren zur Übergabe von Internetprotokoll (IP) zu IP
Procédé de transfert de protocole Internet (IP) à IP

(30) Priority: 20.09.2012 US 201261703268 P; 15.09.2013 US 201314027239
(43) Date of publication of application: 26.03.2014
(73) Proprietor: D2 Technologies Inc., Santa Barbara, CA 93101 (US)
(72) Inventor: Lindsay, David, Santa Barbara, CA California 93105 (US); Parrish, Steve, Algonquin, IL Illinois 60102 (US); Randmaa, Matthew, Santa Barbara, CA California 93111 (US)
(74) Representative: Becker Kurig Straus

(56) References cited:
- US-A1- 2002 122 394
- US-A1- 2009 213 808
- US-A1- 2009 285 175

## Description

### Field of the Invention

This document is generally related to the IP to IP handover problems in a mobile device and specifically related to solutions to the IP to IP handover problems for SIP signaling using either UDP or TCP as the signaling transport.

### Background of the Invention

Cell phone networks have techniques for handing off a voice call from one cell tower to another without disruption in the voice call. As Voice over Internet Protocol (VoIP) is added to cell phones, a similar goal called voice call continuity (VCC) is required. VCC provides continuity in the voice signal as a call is handed off from the legacy cell network to the Internet Protocol (IP) network and vice versa.

As mobile operators move more traffic from the legacy network to IP networks, a new problem arises. There is now a need to switch VoIP calls between a mobile IP network and other IP networks, such as Wi-Fi™ hotspots, without losing the call. This document describes different methods for solving this problem.

VoIP calls are managed by the Session Initiation Protocol (SIP). SIP uses a layer three protocol, either User Datagram Protocol (UDP) or Transmission Control Protocol (TCP), to transport signaling. Major mobile phone operating systems do not allow an application to keep open UDP ports. There are a number of reasons for this restriction, such as device security. Consequently, a mobile device cannot be certified by Google™ if applications are allowed to maintain open UDP ports. Apple™ also does not accept such applications.

This means that the applications that utilize SIP service must use TCP for transport signaling. TCP transport is connection based. When the connection is broken (e.g. Wi-Fi™ hotspot moves out of range), the TCP connection is terminated. This will terminate any active calls.

Another constraint comes from the Connection Manager of popular operating systems for mobile devices, such as Android™. The algorithm used by the Connection Manager disconnects a lower priority network when a higher priority network becomes available. A typical mobile phone accesses the IP network using either the mobile cellular data network interface or the Wi-Fi™ network interface. If the application is using the mobile cellular data network, IP connections will be dropped as soon as a Wi-Fi™ network becomes available. This is not a problem for many data applications like web browsing or email, but it is a serious problem for a voice call.

A known approach to supporting handover is to use virtual private network (VPN) tunnels. The edge router on the service provider's core network can supply VPN to the mobile device. There is a proposed standard to modify the standard VPN protocol to speed up tunnel setup. This would reduce the delay from several seconds to less than a second when switching from one network to another.

With the VPN connection, the mobile device maintains the same IP address when roaming from network to network. The edge router maintains connections while the VPN tunnel is moved. If the VPN application on the client maintains the VoIP application's connection during the network interface change, the handover could be performed without affecting the VoIP application.

However VPN tunnels have some downsides. There is a significant delay to create the VPN tunnel. In addition, each packet experiences some encryption delay. Part of this delay is caused by the need to accumulate enough data for encryption to be effective. If not enough data is accumulated, unauthorized decryption is significantly easier. If the device has hardware support, some of the encryption delay can be minimized. However, the current generation of phones does not have such hardware support.

Another known approach is Internet Protocol version 6 (IPv6) Roaming. Request for Comments (RFC) 6275 describes how IPv6 can support roaming with a mobile device. The device is associated with a home network. This is the network that gives the device its IP address. There is a router on the home network that is responsible for routing traffic to the mobile device. When the device is on the home network, it works like a traditional router. When the device leaves its home network, the mobile device tells the home router where it is located (and a network route is determined), and creates a VPN connection to the home network. It uses this connection for all IP traffic. When the mobile device registers with the IMS server, it is always done through the home router. So as long as the mobile device maintains its VPN connection with the home router, the IMS server can maintain sessions with the mobile device as it roams from one mobile network to another.

This roaming approach has a couple of disadvantages. First, the latency of the call is increased because all incoming packets must first be sent to the home router then sent back out to the device. Even if the home router is inside the service provider's network, a device's home router may be on one coast of a nationwide service provider's network while the device is roaming on another coast. In addition to delay, this approach doubles the coast-to-coast traffic on the service provider's network. Another issue is that all of the traffic from the device is routed this way. For example, when a web page is accessed from the device, the web traffic is going to be routed the same way. This type of roaming is inefficient and unnecessary for most web applications. Since this method uses VPN to connect to the home network, it also has all of the disadvantages of VPN approach for VoIP calls.

U.S. Patent Application Publication No. 2009/285175 A1 discloses handover of an established VoIP call from a first IP address to a second IP address using a NAT router, and U.S. Patent Application Publication No. 2009/0213808 also discloses handover of communication from a first IP connection to a second IP connection using at least two private user identities and one public identity. However, both of these references fail to address all of the problems previously described.

### Summary of the Invention

The present invention aims at providing a method of Internet Protocol (IP) to IP handover of Voice over IP (VoIP) calls using a mobile device without disconnecting an established VoIP call in light of the problems described above.

A method of Internet Protocol to Internet Protocol handover is disclosed that includes a Session Initiation Protocol application of a mobile device connects to a port of a virtual network on the mobile device. A router on the mobile device routes registration of the mobile device with an Internet Protocol Multimedia Core Network Subsystem server from the virtual network to a first Internet Protocol connection to the first network using Transmission Control Protocol. The mobile device forms an established Voice over Internet Protocol call using the virtual network to the first Internet Protocol connection to the first network. A connection manager of the mobile device disconnects the mobile device from the first Internet Protocol connection to the first network when the connection manager determines a second network becomes available, wherein the mobile device remains connected to the port of the virtual network. The connection manager of the mobile device establishes a second Internet Protocol connection to the second network, and the router switches routing of the established Voice over Internet Protocol call to the second Internet Protocol connection to the second network.

### Brief Description of the Drawings

The invention is further illustrated by way of example, taking reference to the accompanying drawings. Thereof:
FIG. 1 is a flow chart for IP to IP handover using UDP signaling,
FIG. 2 is detailed sequence diagram illustrating IP to IP handover using UDP signaling,
FIG. 3 is a flow chart for IP to IP handover using Hybrid TCP/UDP signaling,
FIG. 4 is detailed sequence diagram illustrating IP to IP handover where the SIP TCP connection is terminated when cellular data transmission is disabled by the Connection Manager of the mobile device,
FIG. 5 is a flow chart for IP to IP handover using TCP Signaling via a SIP TCP Proxy,
FIG. 6 is detailed sequence diagram illustrating IP to IP handover using TCP Signaling via a SIP TCP Proxy,
FIG. 7 is a flow chart for IP to IP TCP handover using a Modified Connection,
FIG. 8 is detailed sequence diagram illustrating IP to IP TCP handover using a Modified Connection Manager,
FIG. 9 is a flow chart for IP to IP handover using an on-device router, and
FIG. 10 is a block diagram illustrating the use of a virtual network when using the on-device router according to one embodiment.

### Detailed Description

Within this document and claims, the term "network" is defined as a point of interconnection between a mobile terminal and a private or public network. Therefore, when switching from a first network to a second network or a different network, the IP address of the mobile device also changes. Examples of a network include, *inter alia,* Wi-Fi™ technologies and cellular technologies. Throughout this document and claims, particular technologies are presented as specific examples of use; however, in all cases the description of a particular technology does not limit the claims to only that technology, but is intended to be generalized as described above. For example, a discussion of a trademarked technology, such as, *inter alia,* Wi-Fi™, should be considered a discussion of any and/or all versions of similar technology, rather than the specific technology or the source of the technology. Similarly, when a particular version or portion of a mobile operating system is referenced, it is intended to be generalized to include all versions or portions of a mobile operating system that perform similar functionality. For example, when a term similar to Android Connection Manager is used, the Connection Manager is not limited to being of an Android™ version, but may be a different kind of Connection Manager used with a mobile operating system.

### Handover Using UDP Signaling

A first proposed solution to the IP to IP handover problem is the use of UDP protocol for transport. Although this solution does not meet all of the constraints of the mobile OS, it is a solution to the handover problem.

When UDP is used to transport data, the application has an option to use the protocol in the connectionless mode. When in the connectionless mode, there is no support in the UDP protocol that lets each side know that the other side is still connected. Each side sends UDP packets with the hope that the other side receives them, but reception is not guaranteed. This is referred to as "best effort signaling". In this case, a higher level protocol, SIP, handles the cases where packets are dropped by the network or the other party has been disconnected from the network. SIP uses redundant transmissions and various timeouts to handle dropped packets and disconnection.

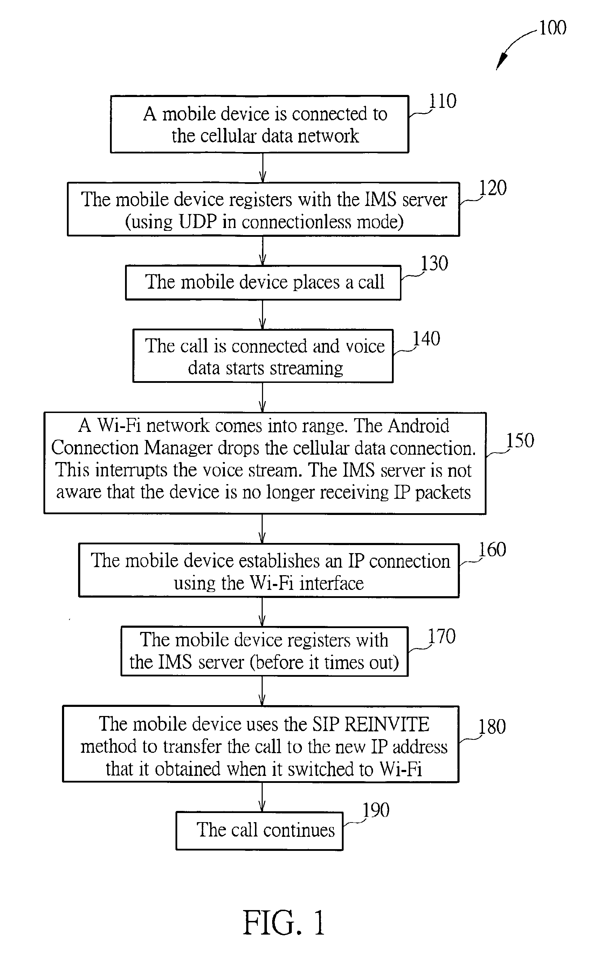

One approach to IP to IP handover is to maintain the state of the call in the IMS network for a short period of time when the mobile device is temporarily disconnected from the network. This would allow a device that quickly recovers connectivity to re-establish the audio stream using the same SIP session. FIG. 1 illustrates a possible sequence 100 of events demonstrating this approach.
Step 110: A mobile device is connected to the cellular data network.
Step 120: The mobile device registers with the IMS server (using UDP in connectionless mode.)
Step 130: The mobile device places a call.
Step 140: The call is connected and voice data starts streaming.
Step 150: A Wi-Fi™ network comes into range. The Android Connection Manager drops the cellular data connection. This interrupts the voice stream. The IMS server is not aware that the device is no longer receiving IP packets.
Step 160: The mobile device establishes an IP connection using the Wi-Fi™ interface.
Step 170: The mobile device registers with the IMS server (before it times out.)
Step 180: The mobile device uses the SIP REINVITE method to transfer the call to the new IP address that it obtained when it switched to Wi-Fi™.
Step 190: The call continues.

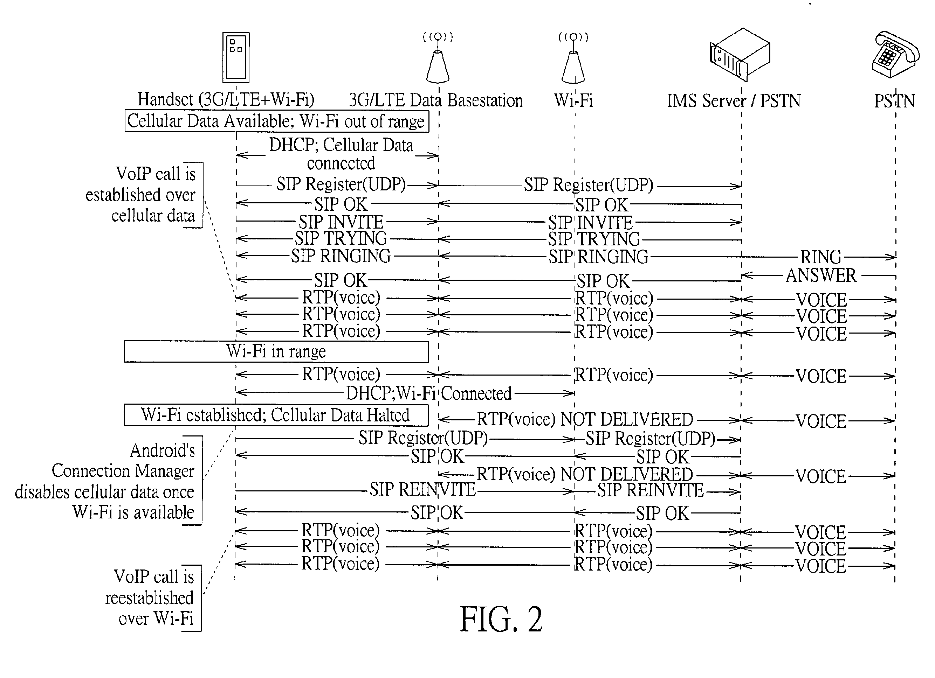

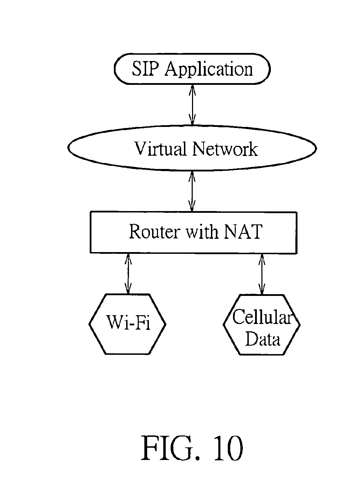

FIG. 2 is detailed sequence diagram illustrating these steps. The following additional terms used in FIG. 2, as well as FIG. 4, FIG. 6, and FIG. 8 are defined as follows. 3G is short for the 3rd Generation cellular technology. LTE is short for Long Term Evolution cellular technology. PSTN is short for public switched telephone network. DHCP is short for Dynamic Host Configuration Protocol. RTP is short for Real-time Transport Protocol. In FIG. 10, NAT is short for Network Address Translation.

When using the disclosed handover using UDP signaling solution to the IP to IP handover problem, although the steps shown in FIG. 1 and FIG. 2 remain approximately the same, the specific networks identified may be different than disclosed without departing from the scope of the claims. For example, in step 110, the mobile device may be connected to a first Wi-Fi™ network, in step 150 a different Wi-Fi™ network comes into range to which the mobile device connects in step 160. Other possible examples would include switching connections of the mobile device from a Wi-Fi™ network to a cellular data network, and/or switching connections of the mobile device from a cellular data network to a different cellular data network using a similar procedure. Furthermore, the Connection Manager is not limited to being of an Android™ version, but may be a different kind of Connection Manager used with a mobile operating system.

### Hybrid TCP/UDP Signaling

This section describes an approach to solving the IP to IP handover that addresses the mobile OS constraint issue (of not allowing open UDP ports) not addressed in the UDP handover approach described in the previous section. This hybrid approach requires that the IMS server is able to support both a TCP and UDP registration from the device simultaneously.

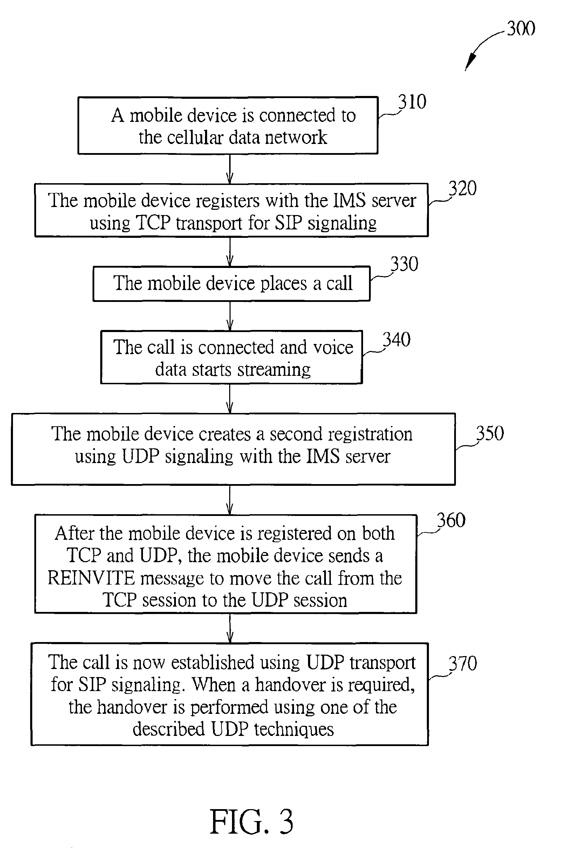

The device substantially permanently registers with the IMS server using TCP for SIP signaling. This is the registration that the IMS server uses for initiating new sessions and managing non-VoIP sessions. The mobile device does not need to keep a UDP port open all of the time, and meets the constraints of the Mobile operating system. Whenever a call is established and active, a second temporary registration is created using UDP for SIP signaling. FIG. 3 illustrates a possible sequence 300 of events demonstrating this hybrid approach.
Step 310: A mobile device is connected to the cellular data network.
Step 320: The mobile device registers with the IMS server using TCP transport for SIP signaling.
Step 330: The mobile device places a call.
Step 340: The call is connected and voice data starts streaming.
Step 350: The mobile device creates a second registration using UDP signaling with the IMS server.
Step 360: After the mobile device is registered on both TCP and UDP, the mobile device sends a REINVITE message to move the call from the TCP session to the UDP session.
Step 370: The call is now established using UDP transport for SIP signaling. When a handover is required, the handover can be performed using one of the described UDP techniques, for example, example a variation of sequence 100 illustrated in FIG. 1, although other UDP techniques are also possible.

When using the disclosed hybrid TCP/UDP signaling solution to the IP to IP handover problem shown in FIG. 3, although the steps shown remain approximately the same, the specific networks identified may be different than disclosed without departing from the scope of the claims. For example, in step 310, the mobile device may be connected to a Wi-Fi™ network.

### Handover Using TCP Signaling via a SIP TCP Proxy

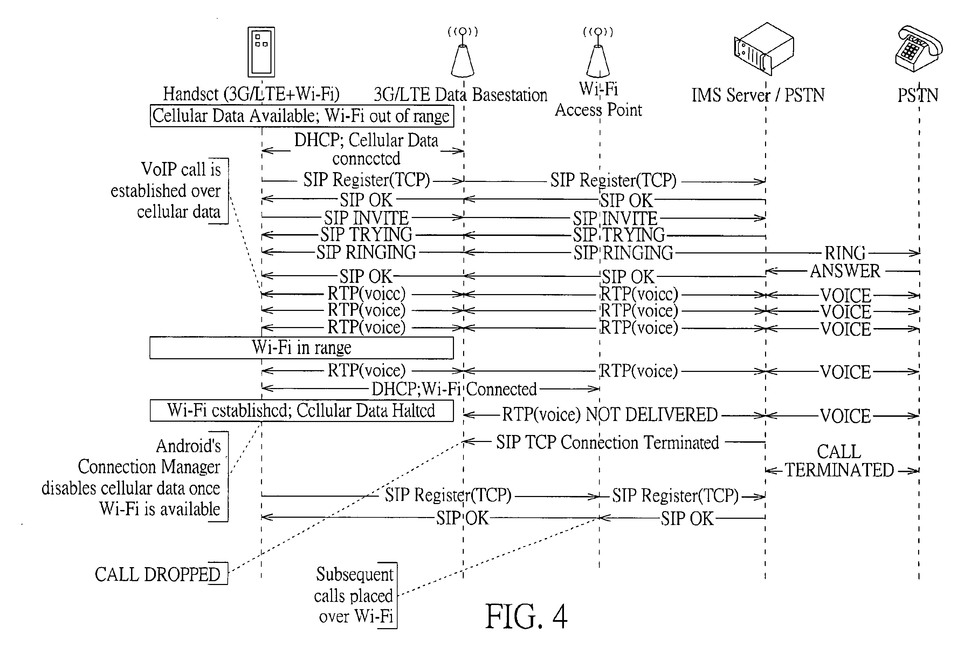

When SIP uses TCP for the data transport, the IP to IP handover problem cannot be solved in the same way as was described above for UDP. Because TCP enforces a connection between endpoints, the IMS server knows when it loses connection with the mobile device. When the IMS server detects the loss of connection, the IMS server terminates the call. This is illustrated in the flow diagram shown in FIG. 4 where the SIP TCP connection is terminated when cellular data transmission is disabled by the Connection Manager of the mobile device.

An approach to solving this problem is to add a SIP TCP proxy into the network. The role of this proxy is to anchor a connection with the IMS server while giving the mobile device a chance to switch IP interfaces and register.

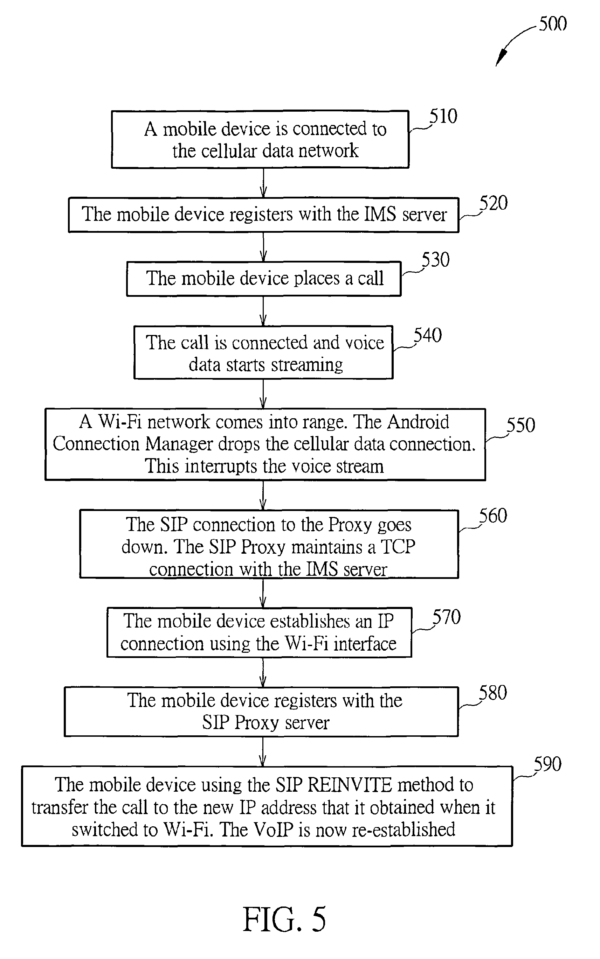

FIG. 5 shows a sequence of actions 500 that can be used demonstrate this approach.
Step 510: A mobile device is connected to a SIP TCP proxy in the cellular data network.
Step 520: The mobile device registers with the IMS server.
Step 530: The mobile device places a call.
Step 540: The call is connected and voice data starts streaming.
Step 550: A Wi-Fi™ network comes into range. The Android Connection Manager drops the cellular data connection. This interrupts the voice stream.
Step 560: The SIP connection to the Proxy goes down. The SIP TCP Proxy maintains a TCP connection with the IMS server.
Step 570: The mobile device establishes an IP connection using the Wi-Fi™ interface.
Step 580: The mobile device registers with the SIP Proxy server.
Step 590: The mobile device using the SIP REINVITE method to transfers the call to the new IP address that it obtained when it switched to Wi-Fi™. The VoIP is now re-established.

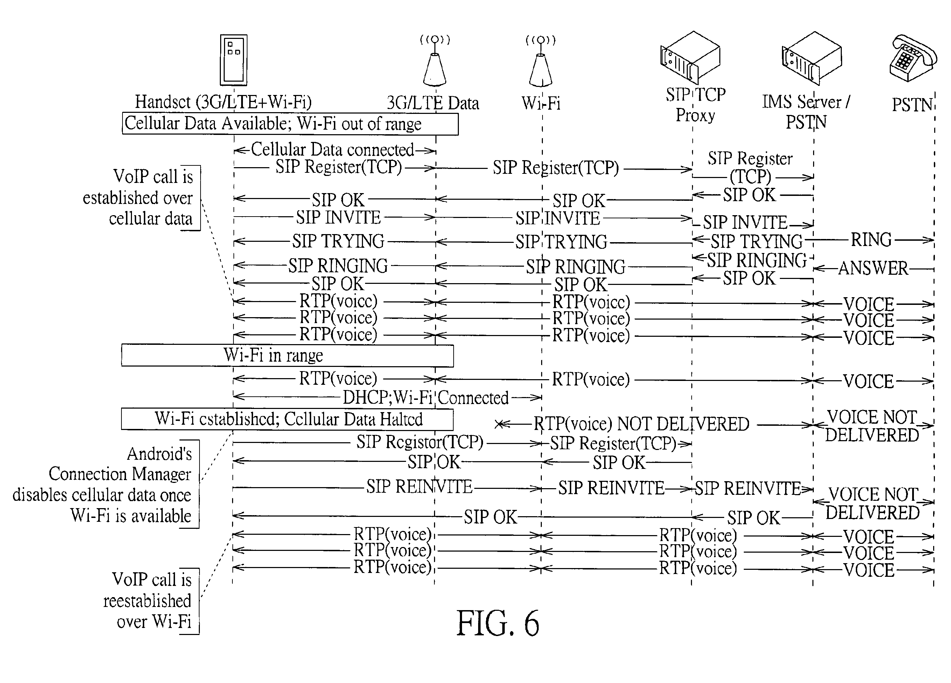

FIG. 6 is a detailed sequence diagram illustrating the sequence of actions 500.

When using the disclosed network SIP TCP proxy solution to the IP to IP handover problem, although the steps shown in FIG. 5 and FIG. 6 remain approximately the same, the specific networks identified may be different than disclosed without departing from the scope of the claims. For example, in step 510, the mobile device may be connected to a first Wi-Fi™ network, in step 550 a different Wi-Fi™ network comes into range to which the mobile device connects in step 570. Other possible examples would include switching connections of the mobile device from a Wi-Fi™ network to a cellular data network, and/or switching connections of the mobile device from a cellular data network to a different cellular data network using a similar procedure. Furthermore, the Connection Manager is not limited to being of an Android™ version, but may be a different kind of Connection Manager used with a mobile operating system.

### TCP Handover Using a Modified Connection Manager

The standard Android Connection Manager only allows one IP interface to be active at a time. Because of this limitation, the VoIP voice connection is dropped when the Connection Manager disconnects from one network before it establishes a new connections when it switches networks. This problem is referred to as "break before make".
If the Android Connection Manager can be replaced with a Modified Connection Manager which allows two network interfaces to be active during the handover from one network to the other, then a voice call can be switched to the new network before the old network is disconnected. This is often referred to in VCC as "make before break".

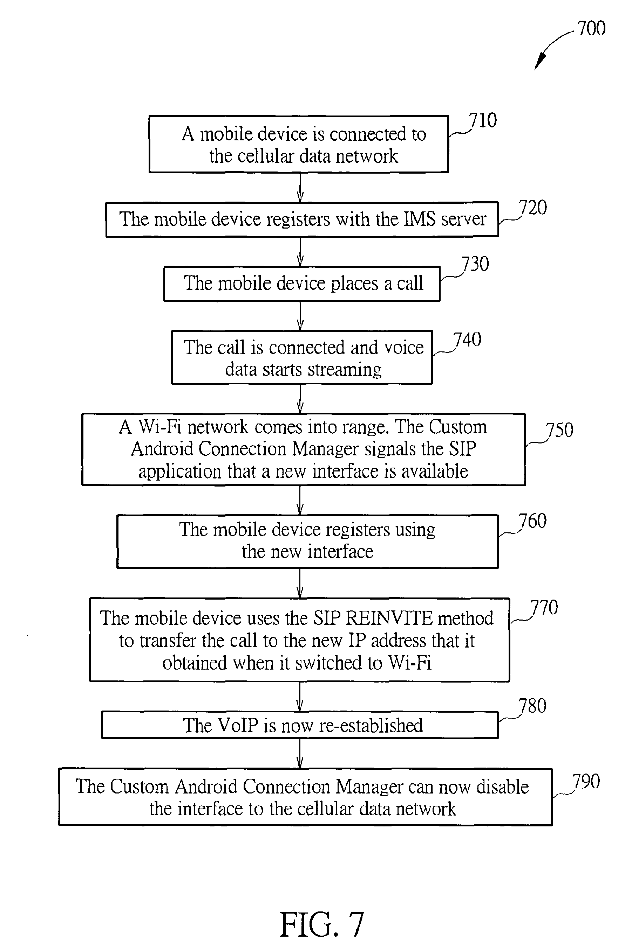

FIG. 7 shows a sequence of actions 700 that can be used demonstrate this approach.
Step 710: A mobile device is connected to the cellular data network.
Step 720: The mobile device registers with the IMS server.
Step 730: The mobile device places a call.
Step 740: The call is connected and voice data starts streaming.
Step 750: A Wi-Fi™ network comes into range. The Custom Android Connection Manager signals the SIP application that a new interface is available.
Step 760: The mobile device registers using the new interface.
Step 770: The mobile device uses the SIP REINVITE method to transfer the call to the new IP address that it obtained when it switched to Wi-Fi™.
Step 780: The VoIP is now re-established.
Step 790: The Custom Android Connection Manager can now disable the interface to the cellular data network.

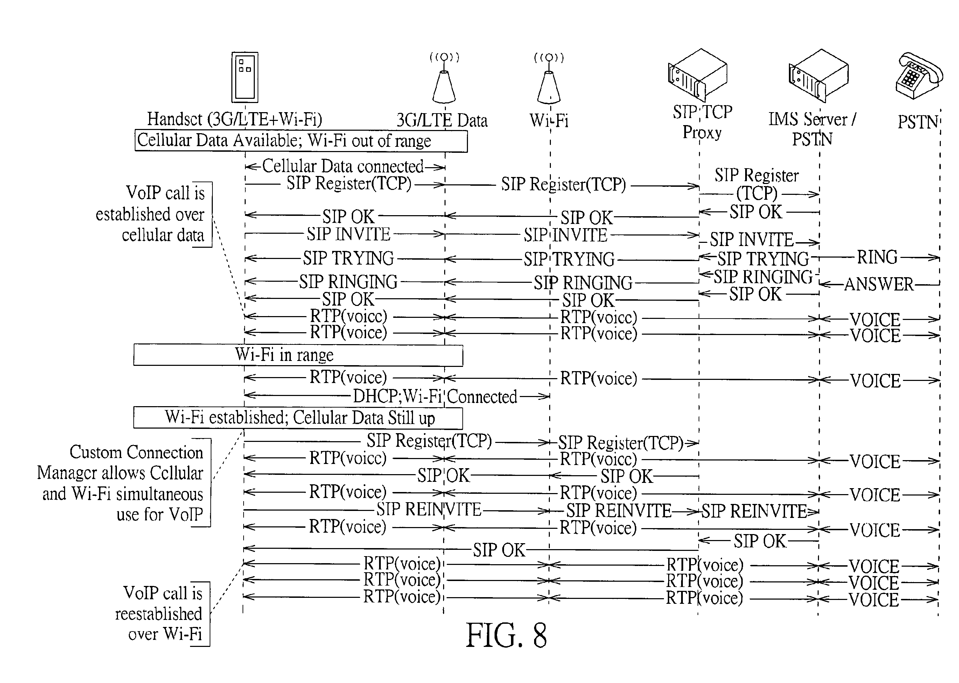

FIG. 8 is a detailed sequence diagram illustrating steps 710-790.

When using the disclosed handover using a modified Connection Manager as solution to the IP to IP handover problem, although the steps shown in FIG. 7 and FIG. 8 remain approximately the same, the specific networks identified may be different than disclosed without departing from the scope of the claims. For example, in step 710, the mobile device may be connected to a first Wi-Fi™ network, in step 750 a different Wi-Fi™ network comes into range to which the mobile device connects in step 760. Other possible examples would include switching connections of the mobile device from a Wi-Fi™ network to a cellular data network, and/or switching connections of the mobile device from a cellular data network to a different cellular data network using a similar procedure. Furthermore, the Connection Manager is not limited to being of an Android™ version, but may be a different kind of Connection Manager used with a mobile operating system that permits multiple IP interfaces to be active at any one time.

### On-Device Router

One of the characteristics of IP networks is that the network path between two devices can change dynamically without the devices losing connection.

Linux devices like Android™ phones are capable of serving as routers. If the device acts as a router supporting a virtual network on the device, it is possible to take advantage of the re-routing capabilities of IP communications to support IP handover of voice calls.

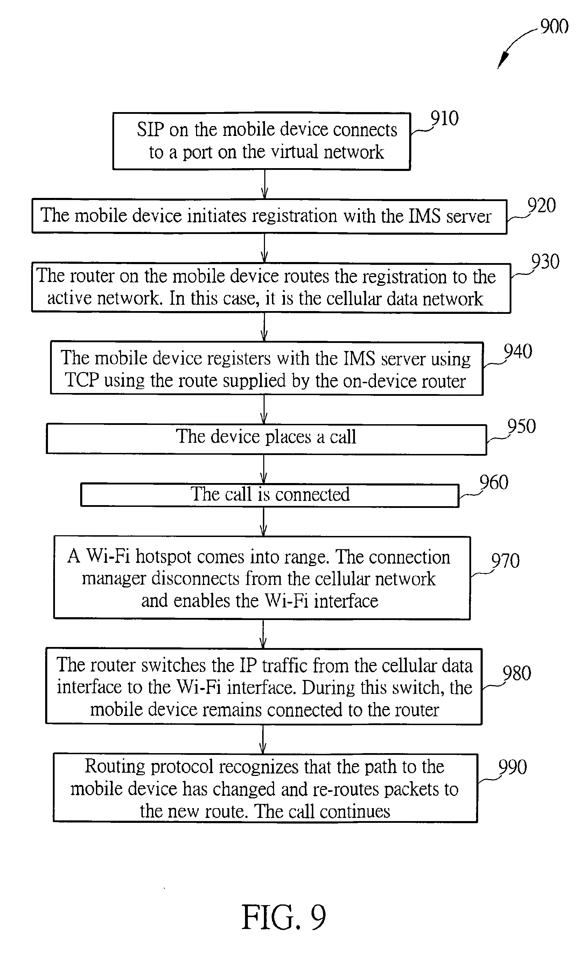

FIG. 9 shows how a mobile device can solve the handover problem using a router on the mobile device using event sequent 900.
Step 910: The SIP on the mobile device connects to a port on a virtual network within the mobile device to the router on the mobile device.
Step 920: The mobile device initiates registration with the IMS server via the virtual network and the router.
Step 930: The router on the mobile device routes the registration to the active network. In this case, it is the cellular data network.
Step 940: The mobile device registers with the IMS server using TCP using the route supplied by the on-device router.
Step 950: The mobile device places a call.
Step 960: The call is connected.
Step 970: A Wi-Fi™ hotspot comes into range. The Connection Manager of the mobile device disconnects from the cellular network and enables the Wi-Fi™ interface.
Step 980: The router switches the IP traffic from the cellular data interface to the Wi-Fi™ interface. During this switch, the mobile device remains connected to the router via the virtual network.
Step 990: Routing protocol recognizes that the path to the mobile device has changed and re-routes packets to the new route. The call continues.

In order for steps 910-990 to work, two conditions must be satisfied. First, switching between networks must be faster than TCP timeouts. Second, the SIP application listens on ports on the virtual network. That port has an address on the virtual network. When the cellular data network is the preferred network, the router simply routes the data to the cellular data network. When the Wi-Fi™ network is the preferred network, the router then routes the data to the Wi-Fi™ network.

Handover occurs when the route is changed from one interface to another. This is somewhat similar to a node in the core network failing and the route changes to accommodate the failed node.

FIG. 10 is a functional block diagram of using the on-device router to switch networks during a VoIP call. The router preferably would include network address translation capabilities to isolate the addresses on the virtual network from the external networks.

When using the disclosed handover using an on-device router as a solution to the IP to IP handover problem, although steps shown in FIG. 9 remain approximately the same, the specific networks identified may be different than disclosed without departing from the scope of the claims. For example, in step 930, the mobile device may be connected to a first Wi-Fi™ network, in step 970 a different Wi-Fi™ network comes into range to which the mobile device connects in step 980. Other possible examples would include switching connections of the mobile device from a Wi-Fi™ network to a cellular data network, and/or switching connections of the mobile device from a cellular data network to a different cellular data network using a similar procedure.

### Summary

This document describes several techniques for solving the IP to IP handover problem. Solutions are described for both SIP signaling using either UDP or TCP as the signaling transport.

## Claims

1. A method (900) of Internet Protocol to Internet Protocol handover, the method **characterized by**:
a Session Initiation Protocol application of a mobile device connecting (910) to a port of a virtual network on the mobile device;
a router on the mobile device routing (930) registration of the mobile device with an Internet Protocol Multimedia Core Network Subsystem server from the virtual network to a first Internet Protocol connection to the first network using Transmission Control Protocol;
the mobile device forming (950) an established Voice over Internet Protocol call using the virtual network to the first Internet Protocol connection to the first network;
a connection manager of the mobile device disconnecting (970) the mobile device from the first Internet Protocol connection to the first network when the connection manager determines a preferred second network becomes available, wherein the mobile device remains connected to the port of the virtual network;
the connection manager of the mobile device establishing a second Internet Protocol connection to the second network; and
the router switching (980) routing of the established Voice over Internet Protocol call to the second Internet Protocol connection to the second network.

2. The method of claim 1 further **characterized in that** the first network is a cellular data network and the second network is a Wi-Fi™ network.

3. The method of claim 1 further **characterized in that** the first network is a Wi-Fi™ network and the second network is a cellular data network.

4. The method of claim 1 further **characterized in that** the first network is a Wi-Fi™ network and the second network is a different Wi-Fi™ network.

5. The method of claim 1 further **characterized in that** the first network is a cellular data network and the second network is a different cellular data network.

## Patentansprüche

1. Verfahren (900) zur Übergabe von Internetprotokoll zu Internetprotokoll, wobei das Verfahren **gekennzeichnet ist durch**:
eine Session Initiation Protocol Anwendung auf einem mobilen Gerät verbindet sich (910) mit einem Anschluss eines virtuellen Netzwerks auf dem mobilen Gerät;
ein Router auf dem mobilen Gerät leitet (930) die Registrierung des mobilen Geräts mit einem Internet Protocol Multimedia Core Network Subsystem Server von dem virtuellen Netzwerk an eine erste Internet-Protokollverbindung mit dem ersten Netzwerk unter Verwendung eines Transmission Control Protocols;
das mobile Gerät bildet (950) einen etablierten Voice over Internet Protocol Aufruf unter Verwendung des virtuellen Netzwerks an die erste Internet Protocol Verbindung mit dem ersten Netzwerk;
ein Verbindungsmanager des mobilen Geräts trennt (970) das mobile Gerät von der ersten Internet Protocol Verbindung mit dem ersten Netzwerk, wenn der Verbindungsmanager bestimmt, dass ein bevorzugtes zweites Netzwerk verfügbar wird, wobei das mobile Gerät mit dem Anschluss des virtuellen Netzwerks verbunden bleibt;
der Verbindungsmanager des mobilen Geräts etabliert eine zweite Internet Protocol Verbindung mit dem zweiten Netzwerk; und
der Router schaltet (980) das Leiten des etablierten Voice over Internet Protocol Aufrufs auf die zweite Internet Protocol Verbindung mit dem zweiten Netzwerk.

2. Verfahren nach Anspruch 1, ferner **gekennzeichnet dadurch, dass** das erste Netzwerk ein Mobilfunkdatennetzwerk ist und dass das zweite Netzwerk ein Wi-Fi Netzwerk ist.

3. Verfahren nach Anspruch 1, ferner **gekennzeichnet dadurch, dass** das erste Netzwerk ein Wi-Fi Netzwerk ist und dass das zweite Netzwerk ein Mobilfunkdatennetzwerk ist.

4. Verfahren nach Anspruch 1, ferner **gekennzeichnet dadurch, dass** das erste Netzwerk ein Wi-Fi Netzwerk ist und dass das zweite Netzwerk ein anderes Wi-Fi Netzwerk ist.

5. Verfahren nach Anspruch 1, ferner **gekennzeichnet dadurch, dass** das erste Netzwerk ein Mobilfunkdatennetzwerk ist und dass das zweite Netzwerk ein anderes Mobilfunkdatennetzwerk ist.

## Revendications

1. Procédé (900) de transfert de protocole Internet à protocole Internet, le procédé étant **caractérisé par** :
une application de protocole d'ouverture de session d'un dispositif mobile se connectant (910) à un port d'un réseau virtuel sur le dispositif mobile ;
un routeur sur le dispositif mobile dirigeant (930) l'enregistrement du dispositif mobile par un serveur de sous-système multimédia de réseau central de protocole Internet depuis le réseau virtuel à une première connexion de protocole Internet vers le premier réseau à l'aide d'un protocole de contrôle de transmission ;
le dispositif mobile formant (950) un appel de type voix sur IP (protocole internet) à l'aide du réseau virtuel à la première connexion de protocole Internet vers le premier réseau ;
un gestionnaire de connexion du dispositif mobile déconnectant (970) le dispositif mobile de la première connexion de protocole Internet vers le premier réseau lorsque le gestionnaire de connexion détermine qu'un deuxième réseau préféré devient disponible, le dispositif mobile restant connecté au port du réseau virtuel ;
le gestionnaire de connexion du dispositif mobile établissant une deuxième connexion de protocole Internet vers le deuxième réseau ; et
le routeur basculant (980) le routage de l'appel de type voix sur IP vers la deuxième connexion de protocole Internet vers le deuxième réseau.

2. Procédé selon la revendication 1, en outre **caractérisé en ce que** le premier réseau est un réseau de données cellulaires et le deuxième réseau est un réseau Wi-Fi^{™}.

3. Procédé selon la revendication 1, en outre **caractérisé en ce que** le premier réseau est un réseau Wi-Fi^{™} et le deuxième réseau est un réseau de données cellulaires.

4. Procédé selon la revendication 1, en outre **caractérisé en ce que** le premier réseau est un réseau Wi-Fi^{™} et le deuxième réseau est un réseau Wi-Fi^{™} différent.

5. Procédé selon la revendication 1, en outre **caractérisé en ce que** le premier réseau est un réseau de données cellulaires et le deuxième réseau est un réseau de données cellulaires différent.
